Europäisches Patentamt

European Patent Office

Office européen des brevets

(11) Veröffentlichungsnummer: **0 044 902**
**A1**

(12) **EUROPÄISCHE PATENTANMELDUNG**

(21) Anmeldenummer: **81101555.1**

(22) Anmeldetag: **04.03.81**

(51) Int. Cl.³: **G 11 B 5/58,** G 11 B 21/20

(30) Priorität: **25.07.80 DE 3028256**

(43) Veröffentlichungstag der Anmeldung: **03.02.82**
**Patentblatt 82/5**

(84) Benannte Vertragsstaaten: **AT BE CH DE FR GB IT LI NL SE**

(71) Anmelder: **WOELKE MAGNETBANDTECHNIK GMBH & CO. KG, Woelke-Strasse 2-3, D-8069 Schweitenkirchen (DE)**

(72) Erfinder: **Franke, Konrad, St.-Kastulus-Strasse 3, D-8069 Schweitenkirchen (DE)**
Erfinder: **Weber, Christoph, Maisteigstrasse 5, D-8057 Eching (DE)**

(74) Vertreter: **Patentanwälte Schaumburg, Schulz-Dörlam & Thoenes, Mauerkircherstrasse 31, D-8000 München 80 (DE)**

(54) **Trägervorrichtung für einen magnetisch-elektrischen Wandler in einer mit Magnetspeicherplatten arbeitenden Schreib-Leseeinrichtung.**

(57) Bei einer Trägervorrichtung für einen magnetisch-elektrischen Wandler in einer mit Magnetspeicherplatten arbeitenden Schreib-Leseeinrichtung ist eine in Richtung senkrecht zur Ebene der Magnetspeicherplatte auslenkbare Trägervorrichtung vorgesehen, die eine im nichtausgelenkten Zustand unter Zugspannung stehende, vorzugsweise bandförmige Folie (24) aufweist, welche zumindest im Schreib-Lesebetrieb in einer Ebene etwa parallel zur Magnetspeicherplatte (14) stationär gehalten ist. Die Folie kann aus Kunststoffmaterial bestehen und an einem Trägerarm gehalten sein, der mit einer relativ zur Magnetspeicherplatte verschiebbaren Führungsvorrichtung starr verbunden ist.

EP 0 044 902 A1

0044902

Die Erfindung betrifft eine Trägervorrichtung für einen magnetisch-elektrischen Wandler in einer mit Magnetspeicherplatten arbeitenden Schreib-Leseeinrichtung, mit einem in Richtung senkrecht zur Ebene der Magnetspeicherplatte auslenkbaren Trägerelement.

Eine bekannte Trägervorrichtung dieser Art ist mit einer Führungsvorrichtung verbunden, die fester Bestandteil eines Laufwerks für flexible Magnetspeicherplatten ist und dazu dient, den magnetisch-elektrischen Wandler in radialer Richtung der Magnetspeicherplatte zu transportieren und auf ausgewählte Magnetspeicherspuren einzustellen. Die flexible Magnetspeicherplatte wird in das Laufwerk von der Seite her eingeschoben und gelangt dabei in den Einflußbereich des magnetisch-elektrischen Wandlers, der an einem Trägerarm befestigt ist, welcher an der Führungsvorrichtung gegen eine Federkraft aus der Ebene der Magnetspeicherplatte geschwenkt werden kann, um das Einschieben der Magnetspeicherplatte zu ermöglichen. Bei doppelseitigem Betrieb der Magnetspeicherplatte sind zwei magnetisch-elektrische Wandler vorgesehen, die an der Oberseite bzw. Unterseite der Magnetspeicherplatte anliegen. Hierbei ist der untere Wandler meist an einem starren unteren Trägerarm befestigt, während der obere Trägerarm in beschriebener Weise geschwenkt werden kann. Es ist aber auch möglich, beide Wandler auslenkbar zu lagern.

Die Mechanik der Trägerarme in Verbindung mit der Führungsvorrichtung, mit der die Wandler in radialer Richtung der Magnetspeicherplatte transportiert werden, ist sehr kompliziert und aufwendig, da einerseits eine sehr genaue Grundeinstellung der Wandler auf eine vorgegebene Bezugsposition erforderlich ist, wenn die Speicherspuren der Magnetspeicherplatte möglichst genau erreicht werden sollen, andererseits infolge der Flexibilität der Magnetspeicherplatten verursachte Lageänderungen der Schreib-Leseebene ausgeglichen bzw. mitvollzogen werden müssen, um stets gleichbleibende Ausgangssignale der Wandler zu erhalten. Dies führt dazu, daß ein magnetisch-elektrischer Wandler mit einer vorgegebenen Andruckkraft in der Größenordnung von 20 p an der Magnetspeicherplatte anliegen, jedoch trotzdem kurzzeitig Auslenkungsbewegungen der Magnetspeicherplatte folgen muß. Außerdem soll der Wandler stets mit seiner gesamten Anlagefläche auf die Magnetspeicherplatte aufsetzen, nicht aber mit einer Seitenkante oder Ecke. Hierzu ist der Wandler an seinem Trägerarm in einem Federrahmen nach Art einer halbkardanischen Aufhängung gelagert, der seinerseits am Trägerarm mit Justierschrauben befestigt ist. Zusätzlich zu der Grundeinstellung des Trägerarms an der Führungsvorrichtung ist somit eine weitere Justierungsarbeit an der Aufhängung des Federrahmens erforderlich. Bei doppelseitigem Betrieb der Schreib-Leseeinrichtung mit zwei auslenkbar gelagerten Wandlern ist dieser Arbeitsaufwand entsprechend größer.

Ähnliche Probleme wie die vorstehend beschriebenen existieren bei Trägervorrichtungen für magnetisch-elektrische Wandler, die in Verbindung mit starren Magnetspeicherplatten in Schreib-Leseeinrichtungen eingesetzt werden. Diese Wandler arbeiten bei Rotation der starren Magnetspeicherplatte im sogenannten fliegenden Betrieb, d.h. sie schweben in äußerst geringem Abstand über der Plattenfläche. Hierzu sind sie an einem Federelement gehalten, das senkrecht zur Ebene der Magnetspeicherplatte auslenkbar ist, so daß sich der fliegende Betrieb des Wandlers nach Aufliegen auf der Magnetspeicherplatte im Ruhezustand durch mit der Drehung der Magnetspeicherplatte verbundene

0044902

aerodynamische Vorgänge und damit verursachte Federauslenkung ergibt. Die Elastizität und die Einstellung des
Federelements bestimmen wesentlich den Betriebsabstand
des Wandlers zur Plattenfläche, so daß an diese Eigenschaften sehr hohe Genauigkeitsanforderungen zu stellen
sind. Außerdem ergibt sich durch das anfängliche Schleifen des Wandlers auf der Plattenoberfläche eine relativ
starke Abnutzung, und es müssen hierzu besondere Spuren
reserviert sein.

Es ist die Aufgabe der Erfindung, eine Trägervorrichtung
für einen magnetisch elektrischen Wandler anzugeben, die
bei einfachem und billigem Aufbau sehr leicht justiert
werden kann, verhältnismäßig unempfindlich gegen äußere
mechanische Krafteinwirkungen ist und trotzdem eine größtmögliche elektrische Sicherheit gegen Lageschwankungen
der Magnetspeicherplatten gewährleistet, so daß sie universell für den Einsatz in Verbindung mit flexiblen und
starren Magnetspeicherplatten geeignet ist.

Diese Aufgabe wird für eine Trägervorrichtung eingangs
genannter Art erfindungsgemäß dadurch gelöst, daß als
Trägerelement eine im nicht ausgelenkten Zustand unter
Zugspannung stehende, vorzugsweise bandförmige Folie
vorgesehen ist, die zumindest im Schreib-Lesebetrieb in
einer Ebene etwa parallel zur Magnetspeicherplatte stationär gehalten ist.

Eine Trägervorrichtung nach der Erfindung erfordert keinen
aufwendigen und komplizierten Mechanismus, mit dem ein
Wandler aus der Ebene der Magnetspeicherplatte geschwenkt
werden kann, und zeichnet sich durch äußerst geringe zu
bewegende Massen aus. Außerdem benötigt sie auch keinen
Federmechanismus, der eine vorbestimmte Andruckkraft des Wandlers an einer flexiblen Magnetspeicherplatte erzeugt, denn als einziges Trägerelement ist eine Folie vorgesehen, die im Ruhezustand unter einer Zugspannung steht. Wenn der Wandler an einer solchen Folie befestigt und diese stationär gehalten ist, so kann im Betrieb einerseits durch die Eigenspannung der Folie eine vorbestimmte Andruckkraft des Wandlers an einer in ein Laufwerk eingeschobenen Magnetspeicherplatte erzeugt werden, andererseits ist es aber auch möglich, infolge der Elastizität der unter Zugspannung stehenden Folie den Wandler senkrecht zur Ebene einer flexiblen Magnetspeicherplatte auszulenken, wenn diese in das Laufwerk eingeschoben wird oder beim Lauf Lageänderungen durchführt bzw. entsprechende Verformungen aufweist. Trotzdem bleibt die erforderliche Andruckkraft des Wandlers erhalten, und es ist auch gewährleistet, daß der Wandler in einer stets genau definierten Lage der Magnetspeicherplatte gegenübersteht, wenn diese in das Laufwerk eingeschoben ist. Dadurch, daß der Wandler an der gespannten Folie befestigt ist, kann er in jeder schräg und senkrecht zur Ebene der flexiblen Magnetspeicherplatte liegenden Auslenkungsrichtung eventuellen Bewegungen der Magnetspeicherplatte folgen. Dies entspricht einer vollkardanischen Aufhängung. Der Wandler kann dadurch und durch die geringe Masse seines Trägerelements im Gegensatz zu den bisher bekannten Vorrichtungen wesentlich schnellere Auslenkungsbewegungen durchführen, wodurch ein besserer Kontakt zwischen dem Wandler und der Magnetspeicherplatte gewährleistet ist und eine höhere Konstanz der elektrischen Signale des Wandlers erreicht wird.

Ein wesentlicher Vorteil der Anordnung des Wandlers an einem Trägerelement in Form einer gespannten Folie besteht darin, daß bei einer Auslenkung des Wandlers eine progressiv zunehmende Andruckkraft an einer flexiblen Magnetspeicherplatte erzeugt wird, während bekannte Vorrichtungen dieser Art eine auch bei größeren Auslenkungen gleichbleibende Andruckkraft des Wandlers an der Magnetspeicherplatte erzeugen. Durch die bei Auslenkung progressiv zunehmende Andruckkraft wird gleichfalls die Konstanz der Ausgangssignale begünstigt, denn es werden nach größeren Auslenkungen Schwingungsbewegungen vermieden.

Die Trägervorrichtung nach der Erfindung eignet sich auch zum Einsatz in Verbindung mit starren Magnetspeicherplatten, denn im Gegensatz zu den bisher verwendeten Trägerelementen bietet eine im nicht ausgelenkten Zustand unter Zugspannung stehende Folie als Trägerelement für den Wandler den beachtlichen Vorteil der genaueren Einstellung der Ausgangsgrößen für die Aufhängung des Wandlers. Dies betrifft insbesondere die parallele Einstellung des Wandlers zur Plattenoberfläche und die äußerst genaue Einstellung der im Flugzustand des Wandlers zur Wirkung kommenden Haltekräfte mittels der anfänglich aufzubringenden Zugspannung. Hierbei ist auch denkbar, den Wandler im Ruhezustand der Schreib-Leseeinrichtung nicht auf der Plattenoberfläche aufliegen zu lassen, sondern in einem genau definierten, äußerst geringen Abstand zur Plattenoberfläche zu halten, so daß beim Anlaufen und Stillsetzen der Einrichtung keine Abnutzung der Plattenoberfläche gegeben ist.

Die Folie besteht vorteilhaft aus einem Kunststoffmaterial, vorzugsweise aus Polyäthylenterephthalat. Ebenso ist es auch möglich, eine Metallfolie als Trägerelement zu verwenden, was von den jeweiligen konstruktiven Forderungen abhängt. Wird eine Kunststoffolie verwendet, so ist es aber möglich, auf diese Folie die Leiterbahnen aufzubringen,

0044902

die zur elektrischen Beschaltung des Wandlers erforderlich sind, wodurch störende mechanische Leitungseinflüsse auf den Wandler vermieden werden. Außerdem bietet die Verwendung von Kunststoff den Vorteil, daß Spurlagenänderungen, die durch Temperatur- und Luftfeuchteschwankungen verursacht werden, weitgehend kompensiert werden können.

Da eine besondere Justierung des Trägerelements selbst infolge seiner stationären Haltung nicht erforderlich ist, muß lediglich das zur Haltung des Trägerelements vorgesehene stationäre Element beim Aufbau eines Laufwerks in eine genau vorbestimmte Lage gebracht werden. Hierzu ist dann zweckmäßig ein Trägerarm vorgesehen, der die Folie hält und außerhalb des Bewegungsbereichs der Magnetspeicherplatte justierbar montiert ist. Es ist dann lediglich erforderlich, diesen Trägerarm hinsichtlich seiner Höhenlage und seiner Radiallage zur Magnetspeicherplatte in eine vorbestimmte Lage zu bringen und ihn so zu justieren, daß der an der gespannten Folie befindliche Wandler in einer Bezugsebene parallel zur Ebene der Magnetspeicherplatte liegt. Hierdurch wird der Fertigungsaufwand für eine Trägervorrichtung wesentlich herabgesetzt, und die bisher hohen Ausfallziffern bei der Fertigung, die auf fehlerhafte Justierung zurückzuführen sind, werden vermieden oder zumindest wesentlich herabgesetzt.

Die Erleichterung der Justage eines auf einer Folie befestigten Wandlers wird im wesentlichen durch die folgenden Effekte möglich:

1) Der Wandler kann sowohl Zug- als auch Druckkräfte während des Justagevorgangs aufnehmen, ohne seine Position irreversibel zu verändern.

2) Ein stationärer Halter für die Folie ist gegen Kräfte, die bei der Justage auf ihn wirken, praktisch unempfindlich.

3) Der stationäre Halter erlaubt die Anbringung genauer Referenzflächen, welche wiederum ihrerseits garantieren, daß der Wandler stets parallel zu einer Magnetspeicherplatte bzw. zu einem ihm gegenüberstehenden Wandler positioniert ist. Der hierfür bei den herkömmlichen Aufhängungssystemen zumindest für einen beweglichen Arm erforderliche Justageaufwand entfällt also durch die Folienaufhängung.

Vorteilhaft kann die Folie auch mit einem schwingungsdämpfenden Material versehen sein, das auf eine möglichst günstige Stelle aufgebracht ist. Ebenso ist es möglich, die Folie mit einer Schicht des schwingungsdämpfenden Materials zu versehen. Dadurch ist es möglich, die Resonanzfrequenz der Aufhängung des magnetisch-elektrischen Wandlers zu beeinflussen und das Auftreten von Eigenschwingungen von vornherein auszuschalten. Auch dadurch wird der Kontakt zwischen dem Wandler und einer flexiblen Magnetspeicherplatte bei verhältnismäßig geringem Zusatzaufwand wesentlich sicherer als bei vorbekannten mechanischen Federanordnungen.

Weiterbildungen der Erfindung, die die Lösung der gestellten Aufgabe begünstigen, sind in den Unteransprüchen angegeben, und die wesentlichen Merkmale und Vorteile von Ausführungsbeispielen für den Einsatz in Verbindung mit flexiblen Magnetspeicherplatten werden im folgenden anhand der Figuren beschrieben. Es zeigen:

- 9 -                          0044902

Fig. 1      den Längsschnitt einer Trägervorrichtung nach
der Erfindung, die mit einer Führungsvorrichtung zum Transport in einem Laufwerk für flexible
Magnetspeicherplatten verbunden ist,

Fig. 2      eine Draufsicht auf den unteren Teil der in

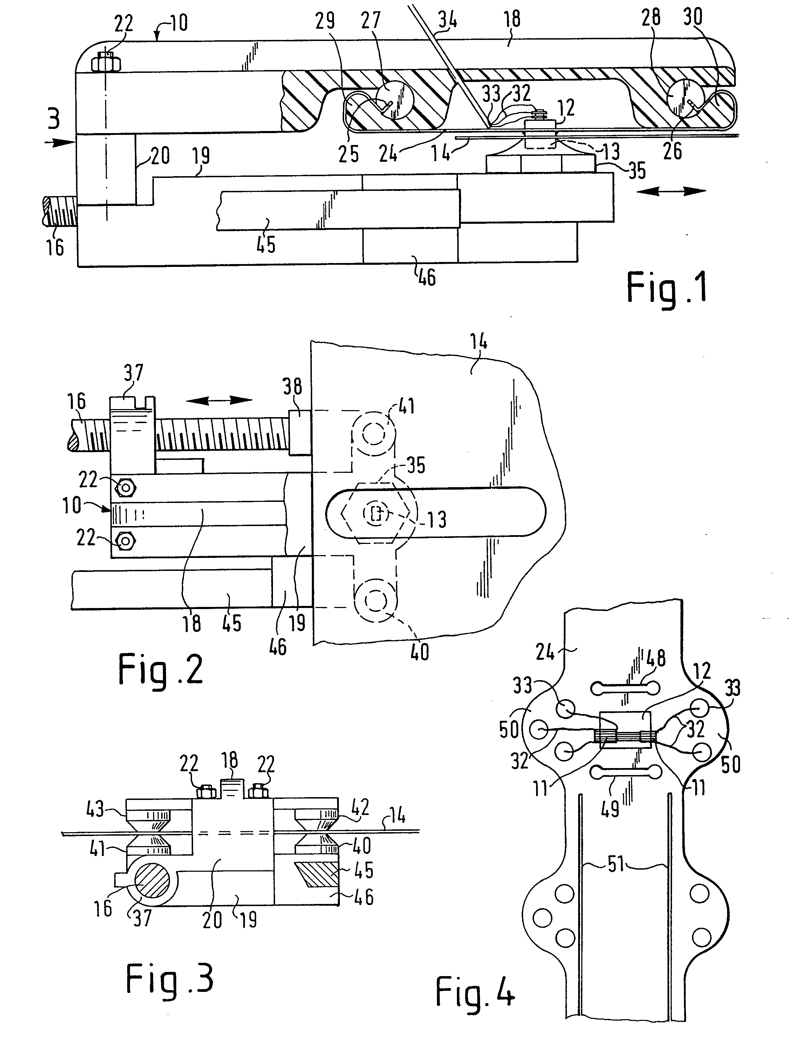

Fig. 1 gezeigten Anordnung in Zuordnung zu einer in
einer Hülle befindlichen Magnetspeicherplatte,

Fig. 3      eine Ansicht der in Fig. 1 gezeigten Anordnung
in der dort gezeigten Blickrichtung 3,

Fig. 4      eine Draufsicht auf einen Abschnitt einer Folie
als Trägerelement für einen Wandler,

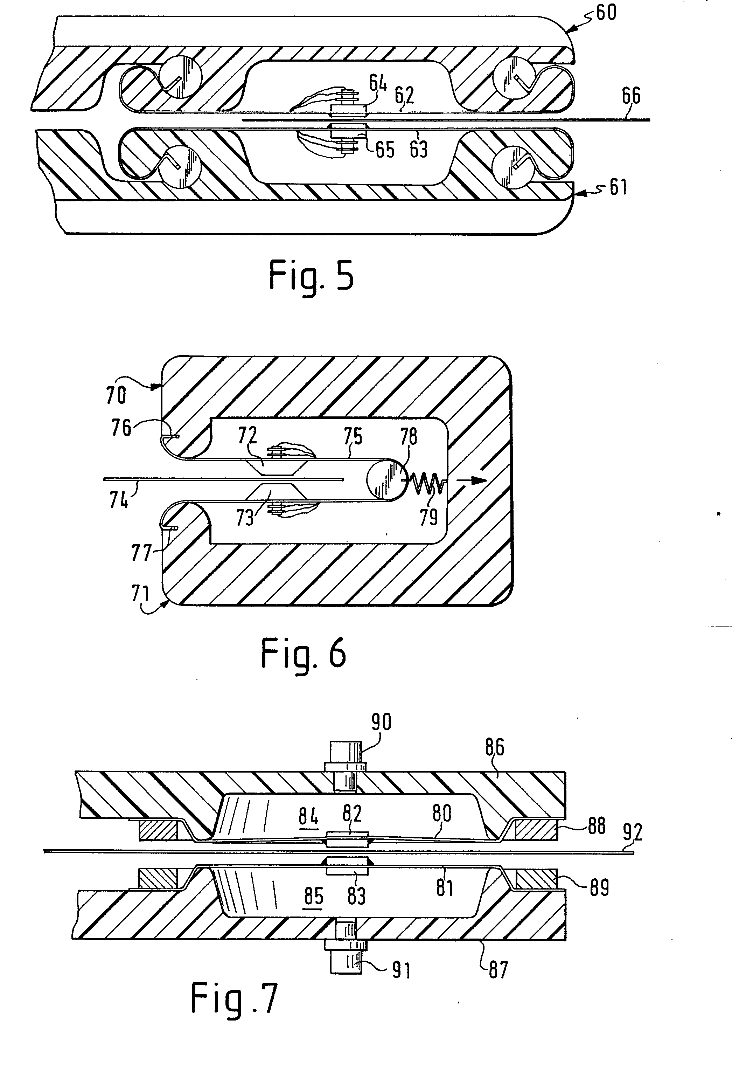

Fig. 5      ein Ausführungsbeispiel einer Trägervorrichtung
für zwei auslenkbar getragene Wandler in einem
Laufwerk für doppelseitigen Betrieb,

Fig. 6      eine Anordnung ähnlich Fig. 5 mit einem anderen
Aufhängungsprinzip für die Wandler und

Fig. 7      ein weiteres Ausführungsbeispiel einer Trägervorrichtung für doppelseitigen Betrieb.

In Fig. 1 ist eine Träger- und Führungsvorrichtung 10 für
zwei magnetisch-elektrische Wandler 12 und 13 zum doppelseitigen Betrieb einer flexiblen Magnetspeicherplatte 14
dargestellt. Sie kann in radialer Richtung der Magnetspeicherplatte 14 mittels eines Antriebs in der dargestellten Pfeilrichtung verschoben werden, zu dem eine
Drehspindel 16 gehört. Die Träger- und Führungsvorrichtung
10 hat einen oberen Trägerarm 18 und einen unteren Trägerarm 19, die über eine Brücke 20 starr miteinander verbunden

0044902

sind. Zur Verbindung und Justage sind im dargestellten Ausführungsbeispiel Schrauben 22 vorgesehen, die eine genaue
Ausrichtung der beiden Trägerarme 18 und 19 zueinander und
zu einer vorgegebenen Magnetspeicherspur ermöglichen, so
daß damit auch die beiden Wandler 12 und 13 genau positioniert werden können.

Aus dem in Fig. 1 gezeigten Teilschnitt ist zu erkennen,
daß der obere Wandler 12 an einer Trägerfolie 24 befestigt
ist, die bandförmig ausgebildet und mit ihren Enden 25 und
26 in Reibstifte 27 und 28 eingelassen ist, welche in ihnen
entsprechend geformten Aussparungen des oberen Trägerarms 18
sitzen und durch Drehung die Trägerfolie 24 in einen vorgegegebenen Zugspannungszustand bringen, der dadurch beibehalten werden kann, daß die Reibstifte 27 und 28 in einem
Reibsitz in den ihnen zugeordneten Aussparungen fixiert
sind. Der obere Trägerarm 18 ist mit Ansätzen 29 und 30 so
versehen, daß die Trägerfolie 24, nachdem sie um sie herumgeführt ist, in einer zur Ebene der Magnetspeicherplatte 14
parallelen Ebene gespannt ist. Die Trägerarme 18 und 19
bestehen vorteilhaft aus einem Kunststoff und sind nach
einem Spritzgußverfahren hergestellt, wie dies auch für
entsprechende vorbekannte Einrichtungen der Fall ist.

Der obere Wandler 12 ist mit Anschlußdrähten 32 versehen,
die auf der Trägerfolie 24 bei 33 fixiert sind und dort
mit Anschlußleitungen 34 verbunden sind, die zu einer
nicht dargestellten Lese- bzw. Schreibschaltung führen.
Der untere Wandler 13 ist in gleicher Weise beschaltet
(nicht dargestellt) und an dem starren unteren Trägerarm 19
in einem ihm angepaßten Gehäuse 35 angeordnet.

Fig. 2 zeigt in einer Draufsicht die in Fig. 1 gezeigte
Träger- und Führungsvorrichtung 10 teilweise gebrochen, so daß im rechten Teil der Figur die Zuordnung einer Magnetspeicherplatte 14 üblicher Art zu dem unteren Wandler 13 zu erkennen ist. Der obere Trägerarm 18 ist über die Brücke 20 (Fig. 1) starr mit einer Spindelführung 37 verbunden, die auf der Drehspindel 16 geführt ist, so daß durch Drehung der Drehspindel 16 ein Transport der gesamten Träger- und Führungsvorrichtung 10 in der dargestellten Pfeilrichtung radial zu der Magnetspeicherplatte 14 erfolgt. Hierzu dient auch eine weitere Führung 38, die gleichfalls starr mit der Träger- und Führungsvorrichtung 10 verbunden ist.

Fig. 2 zeigt ferner, daß der untere Trägerarm 19 mit zwei seitlichen Auslegern 40 und 41 versehen ist, die an der Unterseite der Magnetspeicherplatte 14 anliegen. Sie dienen zusammen mit ihnen entsprechenden, am oberen Trägerarm 18 vorgesehenen elastischen Auslegern 42 und 43 (Fig. 3) dazu, die flexible Magnetspeicherplatte 14 bei ihrem Lauf in einer vorgegebenen Ebene zu halten und Schwingungsbewegungen größerer Amplitude zu dämpfen.

Fig. 3 zeigt die Träger- und Führungsvorrichtung in der in Fig. 1 gezeigten Blickrichtung 3. Es ist zu erkennen, daß die mittels der Schrauben 22 untereinander verbundenen Teile 18, 19 und 20 als eine Einheit mit der Führung 37 an der Drehspindel 16 geführt werden. Zusätzlich ist eine Führungsschiene 45 vorgesehen, die an einem Führungsansatz 46 geführt ist und die verkantungsfreie Transportbewegung der Träger- und Führungsvorrichtung 10 gewährleistet. Diese Führungsschiene 45 ist auch in Fig. 1 und 2 zu erkennen.

Fig. 4 zeigt einen Abschnitt der Trägerfolie 24 in einer Draufsicht. Der obere Wandler 12 ist mit der Trägerfolie 24 verklebt und in einer ihm entsprechend geformten Aussparung der Trägerfolie 24 angeordnet. Seine Wicklungen 11 sind über die bereits erläuterten Anschlußdrähte 32 mit den Anschlußpunkten 33 verbunden, an die die bereits beschriebenen Anschlußleitungen 34 angeschlossen sind.

In radialer Richtung der Magnetspeicherplatte 14 vor und hinter dem Wandler 12 ist jeweils eine schlitzartige Aussparung 48 bzw. 49 vorgesehen. Diese beiden Aussparungen 48 und 49 bewirken, daß der Wandler 12 in einem Bereich der Trägerfolie 24 angeordnet ist, der nicht unter dem Einfluß der Zugspannung steht. Die auf die Trägerfolie 24 durch ihr Einspannen ausgeübte Zugspannung wird somit praktisch um den Wandler 12 herumgeführt, so daß seine allseitig möglichen Auslenkungsbewegungen, die einer voll kardanischen Aufhängung entsprechen, unbeeinflußt von der aufgebrachten Zugspannung sind.

Ferner ist zu erkennen, daß die Anschlußpunkte 33 auf Ausformungen 50 der Trägerfolie 24 vorgesehen sind, die gleichfalls außerhalb des durch die Zugspannung der Trägerfolie 24 beaufschlagten Bereiches liegen. Dadurch wird gewährleistet, daß die elektrischen Verbindungen zwischen dem Wandler 12 und den Anschlußleitungen 34 (Fig. 1) nicht durch die Zugspannung beeinträchtigt werden. Hierzu kann vorteilhaft auch parallel zu jeder Längskante der bandförmigen Trägerfolie 24 ein Schlitz 51 vorgesehen sein, der gleichfalls gewährleistet, daß die Randbereiche der Trägerfolie 24 zugspannungsfrei sind. In diesem Falle können auf der Trägerfolie 24 dann sogar gedruckte Leiterbahnen (nicht dargestellt) vorgesehen sein, so daß sich freitragende Anschlußdrähte 34, wie sie in Fig. 1 gezeigt sind, insgesamt erübrigen. Dadurch ergibt sich dann der Vorteil, daß die Auslenkungsbewegungen der Trägerfolie 24 beim Lauf

der Magnetspeicherplatte 14 nicht durch mechanische Einwirkungen freitragender Anschlußleitungen gestört werden.

Fig. 5 zeigt in einem Längsschnitt die Verwendung einer erfindungsgemäßen Trägervorrichtung, wie sie anhand der Fig. 1 bis 3 für den oberen Trägerarm 18 erläutert wurde, für eine Schreib-Leseeinrichtung, die mit doppelseitigem Betrieb einer Magnetspeicherplatte 66 arbeitet. Der obere und der untere Trägerarm 60 und 61 sind gleichartig aufgebaut und halten jeweils eine Trägerfolie 62 bzw. 63 mit einer anhand der Fig. 1 bereits beschriebenen Konstruktion. Ein oberer und ein unterer Wandler 64 und 65 sind an den starren Trägerarmen 60 und 61 so gehalten, daß sie an der Oberseite bzw. Unterseite der flexiblen Magnetspeicherplatte 66 anliegen und den Lese- bzw. Schreibbetrieb auf deren Magnetspeicherspuren ermöglichen. Beide Wandler 64 und 65 können senkrecht zur Ebene der Magnetspeicherplatte 66 ausgelenkt werden, so daß sie deren Unregelmäßigkeiten in beschriebener Weise folgen können.

Fig. 6 zeigt ein Konstruktionsprinzip starr miteinander verbundener Trägerarme 70 und 71 für einen oberen Wandler 72 und einen unteren Wandler 73, die mit der Ober- bzw. Unterseite einer flexiblen Magnetspeicherplatte 74 in Wechselwirkung stehen. Als Träger dient hier eine den beiden Wandlern 72 und 73 gemeinsame bandförmige Trägerfolie 75, deren Enden 76 und 77 in die freien Enden der Trägerarme 70 und 71 eingelassen und fest verankert sind. Die Trägerfolie 75 ist um einen Spannbolzen 78 herumgeführt, der mittels einer in Fig. 6 schematisch dargestellten Spannvorrichtung 79 in der gezeigten Pfeilrichtung gespannt ist und somit die bandförmige Trägerfolie 75 mit der im nicht ausgelenkten Zustand erforderlichen

- 14 -

0044902

Zugspannung versieht. Bei diesem Prinzip wird eine symmetrische Kräfteverteilung bezüglich der Aufhängung der beiden Wandler 72 und 73 erreicht und die Justierung insgesamt vereinfacht.

Fig. 7 zeigt eine Konstruktionsmöglichkeit, bei der die Trägerfolie 80 bzw. 81 für einen oberen Wandler 82 bzw. einen unteren Wandler 83 eine Kammer 84 bzw. 85 im oberen bzw. unteren Trägerarm 86 bzw. 87 abdeckt. Die Trägerfolie 80 bzw. 81 und/oder die Kammer 84 bzw. 85 kann dabei kreisrund oder auch eckig ausgebildet sein und ist am jeweiligen Trägerarm 86 bzw. 87 mit einem Spannring 88 bzw. 89 gehalten, der in nicht näher dargestellter Weise befestigt ist.

Die Kammern 84 und 85 ermöglichen die Einführung eines Über- bzw. Unterdrucks über jeweils eine Ventilanordnung 90 bzw. 91. Dadurch können vorgegebene Ausgangsbedingungen für die Trägerfolie 80 und 81 eingestellt und ggf. variiert werden, um Anpassungen an unterschiedliche Betriebsbedingungen wie beispielsweise Temperatur, Luftdruck, Luftfeuchte zu ermöglichen. Für die obere Trägerfolie 80 ist angedeutet, daß die Kammer 84 unter einem Unterdruck steht, so daß die obere Trägerfolie 80 gegenüber der Magnetspeicherplatte 92 geringfügig nach oben ausgelenkt ist. Es ist denkbar, zur Steuerung des jeweiligen Über- bzw. Unterdrucks erforderliche Signale mit Dehnungsmeßstreifen zu erzeugen, die auf der jeweiligen Trägerfolie 80 bzw. 81 vorgesehen sind.

Wie Fig. 6 und 7 zeigen, können die Wandler 72 und 73 bzw. 82 und 83 mindestens an ihren dem Mittelpunkt der Magnetspeicherplatte 74 bzw. 92 zu- und abgewandten Seiten abgeschrägt oder mit zusätzlichen Abschrägungen versehen

0044902

sein, um das Einschieben der und das Herausziehen der ggf. in einer Hülle befindlichen Magnetspeicherplatte 74 bzw. 92 auch dann zu ermöglichen, wenn die beiden Wandler 72 und 73 bzw. 82 und 83 wegen ihrer starren Trägerarme aneinander anliegen oder sich unter einem sehr geringen Abstand gegenüberstehen. Somit ist es nicht erforderlich, bei den vorstehend beschriebenen Konstruktionen den einen Trägerarm schwenkbar auszuführen, wie es bei den vorbekannten Einrichtungen mit relativ komplizierten Mechanismen verwirklicht wird.

Die vorstehend beschriebenen und in den Figuren dargestellten Ausführungsbeispiele der Erfindung arbeiten mit einer unter Zugspannung stehenden Folie als Trägerelement für jeweils einen magnetisch-elektrischen Wandler. Dieses Trägerelement wird bereits durch das Einschieben einer flexiblen Magnetspeicherplatte in die Schreib-Leseeinrichtung senkrecht zur Plattenfläche ausgelenkt. Diese im Ruhezustand bereits verursachte Auslenkung ist in den Figuren nicht dargestellt, da sie nur geringfügig ist und bei dem gewählten Abbildungsmaßstab praktisch nicht erkennbar ist.

0044902

Patentansprüche

1. Trägervorrichtung für einen magnetisch-elektrischen Wandler in einer mit Magnetspeicherplatten arbeitenden Schreib-Leseeinrichtung, mit einem in Richtung senkrecht zur Ebene der Magnetspeicherplatte auslenkbaren Trägerelement, dadurch gekennzeichnet, daß als Trägerelement eine im nicht ausgelenkten Zustand unter Zugspannung stehende, vorzugsweise bandförmige Folie (24) vorgesehen ist, die zumindest im Schreib-Lesebetrieb in einer Ebene etwa parallel zur Magnetspeicherplatte (14) stationär gehalten ist.

2. Trägervorrichtung nach Anspruch 1, dadurch gekennzeichnet, daß die Folie (24) aus einem Kunststoffmaterial, vorzugsweise aus Polyäthylenterephthalat, besteht.

3. Trägervorrichtung nach Anspruch 1 oder 2, dadurch gekennzeichnet, daß zur Haltung der Folie (24) ein Trägerarm (18) vorgesehen ist, der mit einer an sich bekannten, relativ zur Magnetspeicherplatte (14) verschiebbaren Führungsvorrichtung (16, 37, 38) starr verbunden ist.

4. Trägervorrichtung nach Anspruch 3, dadurch gekennzeichnet, daß der Trägerarm (18) an der Führungsvorrichtung (16, 37, 38) justierbar befestigt ist.

5. Trägervorrichtung nach Anspruch 3 oder 4, dadurch gekennzeichnet, daß die bandförmige Folie (24) in Längsrichtung des Trägerarms (18) gespannt ist und mit mindestens einem Ende (25, 26) in einem Spannelement (27, 28) verankert ist.

0044902

6. Trägervorrichtung nach Anspruch 5, dadurch gekennzeichnet, daß als Spannelement ein im Trägerarm (18) quer zu dessen Längsrichtung in einem Reibsitz angeordneter Drehbolzen (27, 28) vorgesehen ist, in den das zugeordnete Ende der bandförmigen Folie (24) eingelassen ist.

7. Trägervorrichtung nach Anspruch 5 oder 6, dadurch gekennzeichnet, daß beide Enden der bandförmigen Folie (24) in einem Spannelement (27, 28) verankert sind.

8. Trägervorrichtung nach einem der vorhergehenden Ansprüche, dadurch gekennzeichnet, daß der Wandler (12) mit der Folie (24) verklebt ist.

9. Trägervorrichtung nach einem der vorhergehenden Ansprüche, dadurch gekennzeichnet, daß ein vorzugsweise in Richtung zur Mitte der Magnetspeicherplatte (74; 92) schräg zur Folienebene hin abfallender Wandlerkörper (72, 73) oder eine entsprechende separate Abschrägung vorzugsweise aus Kunststoffmaterial vorgesehen ist.

10. Trägervorrichtung nach einem der vorhergehenden Ansprüche, dadurch gekennzeichnet, daß die Folie (24) beiderseits des Wandlers (12) schlitzförmige Aussparungen (48, 49) quer zur Radialrichtung der Magnetspeicherplatte (14) aufweist.

11. Trägervorrichtung nach einem der Ansprüche 2 bis 10, dadurch gekennzeichnet, daß die Folie mit Leiterbahnen zur Beschaltung des Wandlers versehen ist.

12. Trägervorrichtung nach einem der vorhergehenden Ansprüche, dadurch gekennzeichnet, daß die Folie mit einem schwingungsdämpfenden Material versehen ist.

0044902

13. Trägervorrichtung nach Anspruch 12, dadurch gekennzeichnet, daß eine schwingungsdämpfende Beschichtung vorgesehen ist.

14. Trägervorrichtung nach einem der Ansprüche 3 bis 13, dadurch gekennzeichnet, daß der Trägerarm (18) mit seitlichen, auf der Magnetspeicherplatte (14) vorzugsweise elastisch aufliegenden Auslegern (42,43) versehen ist, denen entsprechende, mit der Führungsvorrichtung (16, 37, 38) starr verbundene Ausleger (40, 41) unter der Magnetspeicherplatte (14) gegenüberstehen.

15. Trägervorrichtung nach einem der vorhergehenden Ansprüche für doppelseitigen Betrieb der Schreib-Leseeinrichtung mit zwei magnetisch-elektrischen Wandlern, dadurch gekennzeichnet, daß die bandförmige Folie (75) mit ihren beiden Enden (76, 77) an den freien Enden der Schenkel (70, 71) eines U-förmigen Doppelträgerarms befestigt und auf halber Länge zwischen ihren Enden (76, 77) an der Basis des U-förmigen Doppelträgerarms mittels einer Spannvorrichtung (78, 79) so gehalten ist, daß an den beiden zueinander parallelen Folienteilen einander gegenüberliegend befestigte Wandler (72, 73) der Ober- bzw. Unterseite einer zwischen ihnen angeordneten Magnetspeicherplatte (74) gegenüberstehen.

16. Trägervorrichtung nach einem der Ansprüche 1 bis 14, dadurch gekennzeichnet, daß zur Haltung der Folie (80; 81) ein Trägerarm (86; 87) mit einer vorzugsweise kreisrunden Vertiefung (84; 85) vorgesehen ist, über der die Folie (80; 81) membranartig gespannt befestigt ist.

17. Trägervorrichtung nach Anspruch 16, dadurch gekennzeichnet, daß die Vertiefung eine nach außen dichte Kammer (84; 85) ist, die über eine Ventilanordnung (90; 91) mit einem vorbestimmten Über- bzw. Unterdruck beaufschlagbar ist.

Fig.1

Fig.2

Fig.3

Fig.4

0044902

Fig. 5

Fig. 6

Fig. 7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 229 268 (E.R. SOLYST)<br><br>* Spalte 4, Zeilen 68-72; Spalte 5, Zeilen 8-16; Figuren 2,5 *<br><br>--- | 1,2, 5,11 |
| | DE - A - 2 014 145 (IBM)<br><br>* Seite 3, Zeilen 6-24; Figuren 1,2 *<br><br>& DE - A - 1 774 362 *<br><br>--- | 1,3, 16,17 |
| | US - A - 3 763 331 (HISAO KINJO et al.)<br><br>* Spalte 4, Zeilen 50-57; Spalte 5, Zeilen 3-5; Spalte 5, Zeilen 53-63; Spalte 6, Zeilen 8-11; Figuren 1-3 *<br><br>& DE - A - 2 034 236<br><br>--- | 1-5, 12 |
| | IBM TECHNICAL DISCLOSURE BULLETIN, Band 13, Heft 9, Februar 1971, NEW YORK (US)<br>H. REICH: "Multi-core magnetic head", Seite 2641<br><br>* Insgesamt *<br><br>--- | 1,2, 16,17 |
| | IBM TECHNICAL DISCLOSURE BULLETIN, Band 21, Heft 12, Mai 1979, NEW YORK (US)<br>R.C. BAUCK et al.: "Head adjustment for disk", Seiten 4781-4782<br><br>* Insgesamt *<br><br>--- | 4 |
| | IBM TECHNICAL DISCLOSURE BULLETIN, Band 21, Heft 8, Januar 1979, NEW YORK (US)<br>R.E. NORWOOD: "Damped head arm", Seite 3093<br><br>./.. | 12,13 |

**KLASSIFIKATION DER ANMELDUNG (Int. Cl.³)**

G 11 B 5/58
G 11 B 21/20

**RECHERCHIERTE SACHGEBIETE (Int. Cl.³)**

G 11 B 5
G 11 B 17
G 11 B 21

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort<br>Den Haag | Abschlußdatum der Recherche<br>12.10.1981 | Prüfer<br>RAHNER |
|---|---|---|

EPA form 1503.1 06.78

| | EINSCHLÄGIGE DOKUMENTE | | | KLASSIFIKATION DER ANMELDUNG (Int.Cl. 3) |
|---|---|---|---|---|
| Kategorie | Kennzeichnung des Dokuments mit Angabe, soweit erforderlich, der maßgeblichen Teile | | betrifft Anspruch | |
| | * Insgesamt * | | | |
| | --- | | | |
| | US - A - 4 167 766 (SET B. CHAU) | | 1,9 | |
| | * Spalte 3, Zeilen 56-62; Figur 4 * | | | |
| | ---------- | | | RECHERCHIERTE SACHGEBIETE (Int. Cl. 3) |